# EUROPEAN PATENT SPECIFICATION

(11) **EP 2 855 624 B1**
(45) Date of publication and mention of the grant of the patent: **15.11.2017**
(21) Application number: 13728296.8
(22) Date of filing: 31.05.2013
(51) Int. Cl.: C09K 8/584, C09K 8/594, C11D 1/722

(54) **METHOD AND COMPOSITION FOR ENHANCED OIL RECOVERY BASED ON SUPERCRITICAL CARBON DIOXIDE AND A NONIONIC SURFACTANT**
VERFAHREN UND ZUSAMMENSETZUNG ZUR VERBESSERTEN ÖLRÜCKGEWINNUNG AUF BASIS VON ÜBERKRITISCHEM KOHLENDIOXID UND EINEM NICHTIONISCHEN TENSID
PROCÉDÉ ET COMPOSITION PERMETTANT UNE RÉCUPÉRATION AMÉLIORÉE DE PÉTROLE AU MOYEN DE DIOXYDE DE CARBONE SUPERCRITIQUE ET D'UN TENSIOACTIF NON IONIQUE

(30) Priority: 31.05.2012 US 201261653845 P
(43) Date of publication of application: 08.04.2015
(73) Proprietor: Dow Global Technologies LLC, Midland, MI 48674 (US)
(72) Inventor: ABBAS, Sayeed, Midland Michigan 48674 (US); ELOWE, Paul R., Midland, Michigan 48640 (US); SANDERS, Aaron W., Midland, Michigan 48674 (US); FALCONE-POTTS, Susan, Clute, Texas 77531 (US)
(74) Representative: Beck Greener
(86) International application number: PCT/US2013/043548
(87) International publication number: WO 2013/181499

(56) References cited:
- EP-A2- 0 505 002
- WO-A1-2011/152856
- US-A- 4 380 266
- US-A- 4 828 029
- US-A- 5 033 547
- US-A1- 2009 082 483
- US-A1- 2010 029 799

## Description

### Field of Disclosure

Embodiments of the present disclosure are directed towards oil recovery compositions, more specifically, embodiments are directed towards oil recovery compositions including a non-ionic surfactant that is soluble in carbon dioxide.

### Background

A variety of techniques have been used to enhance the recovery of hydrocarbons from subterranean formations in which the hydrocarbons no longer flow by natural forces. Such techniques can include water injection and/or subsequent miscible carbon dioxide flooding, among others. Water injection can be useful to recover some hydrocarbons, however, only about a third of the hydrocarbons are recovered using this technique. As such, typically water injection procedures are followed by an enhanced oil recovery technique such as miscible gas flooding. Miscible gas flooding can be performed with carbon dioxide, to reduce the viscosity of the crude oil present in the subterranean formation in order to increase the flow of hydrocarbons to a production well. Carbon dioxide, which acts as a solvent to reduce the viscosity of the crude oil, is an effective and relatively inexpensive miscible gas. During a miscible carbon dioxide flooding procedure the carbon dioxide is typically in the liquid and/or supercritical phase.

Miscible carbon dioxide flooding, however, can be accompanied with a number of drawbacks. One main problem encountered is poor sweep of the subterranean formation. Poor sweep occurs when the gas injected into the reservoir during a miscible carbon dioxide flooding process flows through the paths of least resistance due to the low viscosity of the gas, thus bypassing significant portions of the formation. When the gas bypasses significant portions of the formation, less crude oil is contacted with the gas, reducing the likelihood that the gas will reduce the viscosity of the crude oil. Thus, the gas injected during the miscible carbon dioxide flooding process is meant to "sweep" the crude oil toward the production well by lowering the viscosity of the crude oil. However, when the gas does not contact a large portion of the crude oil contained in the subterranean formation, a large portion of the crude oil in the subterranean formation is left behind, producing poor sweep. In addition, due to the low density of the gas, the injected gas can rise to the top of the formation and "override" portions of the formation, leading to early breakthrough of the gas at the production well, leaving less gas within the subterranean formation to contact with the crude oil, again reducing the likelihood that the gas will reduce the viscosity of the crude oil.

To enhance the effectiveness of the miscible carbon dioxide flooding process it has been suggested that a foaming agent or a surfactant be included in the process to help to generate an emulsion in the formation. An emulsion can generate an apparent viscosity of 100 to 1000 times that of the injected gas, therefore, the emulsion can inhibit the flow of the gas into that portion of the subterranean formation that has previously been swept. In other words, the emulsion can serve to block the volumes of the subterranean formation through which the gas can short-cut, thereby reducing its tendency to channel through highly permeable fissures, cracks, or strata, and directing it toward previously unswept portions of the subterranean formation. As such, the emulsion can force the gas to drive the recoverable hydrocarbons from the less depleted portions of the reservoir toward the production well. US 5033547 discloses a process for recovering petroleum from an underground reservoir, comprising injection of a mixture of carbon dioxide and an emulsifying agent, where the emulsifying agent comprises an ethoxylated alcohol having a C7-15 alkyl group and 4-8 ethoxy units.

### Summary

The present disclosure provides an oil recovery composition including a dimeric non-ionic surfactant of Formula I or a regioisomer thereof: 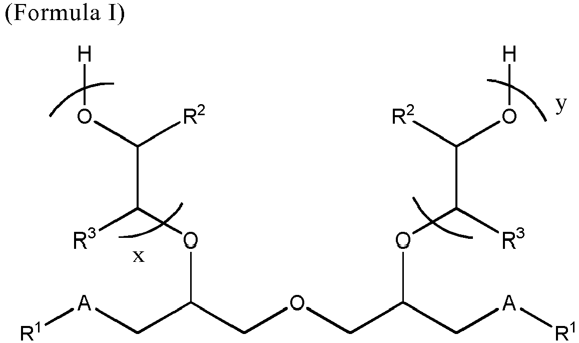 in which each R¹ is independently a hydrocarbyl group containing 1 to 20 carbons, each R² and R³ are independently an H atom or a hydrocarbyl group containing 1 to 10 carbons, each A is independently an oxygen atom or a CH₂ group; and x and y are independently 0 to 100, with the proviso that x + y is from 1 to 200. The oil recovery composition includes carbon dioxide.

The present disclosure provides a method including providing a flow of carbon dioxide to an oil containing reservoir, injecting the dimeric non-ionic surfactant of Formula I into the flow of carbon dioxide to form a mixture, and injecting the mixture into the oil containing reservoir.

The above summary of the present disclosure is not intended to describe each disclosed embodiment or every implementation of the present disclosure. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

### Brief Description of the Figures

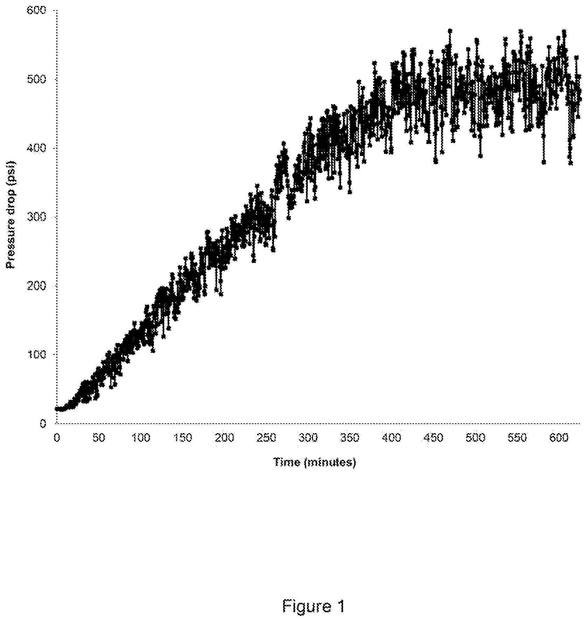

Figure 1 illustrates a pressure drop versus time diagram associated with an oil recovery composition in accordance with one or more embodiments of the present disclosure.

### Detailed Description

Methods of forming surfactant precursor compositions are described herein. These surfactant precursor compositions can be used to form non-ionic surfactants. The non-ionic surfactants can be included in an oil recovery composition, e.g., a composition that is useful for recovery of hydrocarbons from an oil containing reservoir. As an example, a method of forming a surfactant precursor composition can include admixing a 1,2-diol and a base to form a mixture and heating the mixture to a temperature in a range from 20 degrees Celsius to 350 degrees Celsius for a time interval from 2 hours to 1000 hours to form the surfactant precursor composition.

Embodiments of the present disclosure can provide benefits such as providing an increase in a desired product such as a dimer, as compared to other methods of forming surfactant precursor compositions. Additionally, embodiments of the present disclosure can provide a reduction in an undesirable product such as a trimer while providing increased amounts of dimer, as compared to other methods of forming surfactant precursor compositions.

Methods of forming a surfactant precursor composition can include admixing a 1,2-diol and a base to form a mixture. Diols are compounds that contain two hydroxyl groups. A hydroxyl group is a functional group having an oxygen atom connected by a covalent bond to a hydrogen atom. 1,2-diols are compounds that contain two hydroxyl groups, each one on adjacent carbon atoms. Examples of 1,2-diols include, but are not limited to, 2-ethylhexyl glyceryl ether, 1,2-propanediol, 1,2-butanediol, 1,2-penatnediol, 1,2-hexanediol, 1,2-heptanediol, 1,2-octanediol, 1,2-decanediol, 1,2-dodecanediol, 1,2-tetradecanediol, isopropyl glyceryl ether, isobutyl glyceryl ether, 2-propylheptyl glyceryl ether or a combination thereof, among other 1,2 diols.

A base is a compound or an atom having an available pair of electrons capable of forming a covalent bond with a hydron. Examples of bases include, but are not limited to, lithium carbonate, sodium carbonate, potassium carbonate, lithium hydroxide, sodium hydroxide, potassium hydroxide, caesium hydroxide, calcium hydroxide, barium hydroxide, magnesium oxide, calcium oxide, barium oxide, zinc oxide, cerium oxide, sodium bicarbonate, lithium hydride, sodium hydride, potassium hydride or a combination thereof, among other bases.

In accordance with a number of embodiments of the present disclosure, the 1,2-diol and the base can be admixed at a mole ratio of 10000 moles of 1,2-diol:1 mole of base to 1 mole of 1,2-diol: 10 moles of base. The 1,2-diol and the base can, by way of example, be admixed at a mole ratio of 1,2-diol to base in a range with a upper limit of 10000:1, 5000:1, or 1000:1 to a lower limit of 1:10, 2:10, or 5:10. For example, 1,2-diol and the base can be admixed at a mole ratio of 1,2-diol to base in a range from 10000:1 to 1:10, 5000:1 to 2:10, or 1000:1 to 5:10.

In accordance with a number of embodiments of the present disclosure, the mixture formed by admixing the 1,2-diol and the base can be heated to a temperature in a range from 20 degrees Celsius (°C) to 350 °C. The mixture formed by admixing the 1,2-diol and the base can, by way of example, be heated to a temperature in a range with a lower limit of 20 °C, 25 °C, 30 °C to an upper limit of 350 °C, 300 °C, or 250 °C. For example, the mixture formed by admixing the 1,2-diol and the base can be heated to a temperature in a range of 20 °C to 350 °C, 25 °C to 300 °C, or 30 °C to 250 °C.

In accordance with a number of embodiments of the present disclosure, the mixture formed by admixing the 1,2-diol and the base can be heated to a temperature, as discussed herein, for a time interval from 2 hours to 1000 hours. The mixture formed by admixing the 1,2-diol and the base can by way of example, be heated to a temperature, as discussed herein, for a time interval in a range with a lower limit of 2 hours, 5 hours, or 10 hours to an upper limit of 1000 hours, 750 hours, or 500 hours. For example, the mixture formed by admixing the 1,2-diol and the base can be heated to a temperature, as discussed herein, for a time interval from 2 hours to 1000 hours, 5 hours to 750 hours, or 10 hours to 500 hours.

The methods of forming a surfactant precursor composition, as described herein, can be utilized to form surfactant precursor compositions. The surfactant precursor compositions, for example, can include unreacted 1,2-diol, a dimer of the 1,2-diol, and a trimer of the 1,2-diol, among others.

In accordance with a number of embodiments of the present disclosure, the surfactant precursor composition may undergo a separation process to remove one or more of the unreacted 1,2-diol, the dimer of the 1,2-diol, and the trimer of the 1,2-diol.

In accordance with a number of embodiments of the present disclosure, the surfactant precursor compositions can include 50 mole percent dimer of the 1,2-diol to 100 mole percent dimer of the 1,2-diol, where the mole percent is based upon moles of the unreacted 1,2-diol, moles of the dimer of the 1,2-diol, and moles of the trimer of the 1,2-diol. The surfactant precursor compositions can, by way of example, include dimer of the 1,2-diol in a range with a lower limit of 50 mole percent, 55 mole percent, or 60 mole percent to an upper limit of 100 mole percent, 97 mole percent, or 95 mole percent. For example, the surfactant precursor compositions can include dimer of the 1,2-diol in a range of 50 mole percent to 100 mole percent, 55 mole percent to 97 mole percent, or 60 mole percent to 95 mole percent. As mentioned, for some applications, such applications that utilize carbon dioxide solubility, a dimer, e.g., dimer of the 1,2-diol, is a desirable product. For applications that utilize carbon dioxide solubility, the dimer, which has a lesser molecular weight, as compared to the trimer and other higher weight oligimers, is more soluble in the carbon dioxide and therefore desirable.

In accordance with a number of embodiments of the present disclosure, the surfactant precursor compositions can include 0.50 mole percent trimer of the 1,2-diol to 15 mole percent trimer of the 1,2-diol, where the mole percent is based upon moles of the unreacted 1,2-diol, moles of the dimer of the 1,2-diol, and moles of the trimer of the 1,2-diol. The surfactant precursor compositions can, by way of example, include trimer of the 1,2-diol in a range with a lower limit of 0.50 mole percent, 1 mole percent, or 2 mole percent to an upper limit of 15 mole percent, 12.5 mole percent, or 10 mole percent. For example, the surfactant precursor compositions can include trimer of the 1,2-diol in a range of 0.50 mole percent to 15 mole percent, 1 mole percent to 12.5 mole percent, or 2 mole percent to 10 mole percent. As mentioned, for some applications, such applications that utilize carbon dioxide solubility, a trimer, e.g., trimer of the 1,2-diol, is an undesirable product. For applications that utilize carbon dioxide solubility, the trimer, which has a greater molecular weight, as compared to the dimer, is less soluble in the carbon dioxide and therefore undesirable.

In accordance with a number of embodiments of the present disclosure, the surfactant precursor compositions can include 5 mole percent unreacted 1,2-diol to 25 mole percent unreacted 1,2-diol, where the mole percent is based upon moles of the unreacted 1,2-diol, moles of the dimer of the 1,2-diol, and moles of the trimer of the 1,2-diol. The surfactant precursor compositions can, by way of example, include unreacted 1,2-diol in a range with a lower limit of 5 mole percent, 7.5 mole percent, or 10 mole percent to an upper limit of 25 mole percent, 22.5 mole percent, or 20 mole percent. For example, the surfactant precursor compositions can include unreacted 1,2-diol in a range of 5 mole percent to 25 mole percent, 7.5 mole percent to 22.5 mole percent, or 10 mole percent to 20 mole percent. As mentioned, for some applications, unreacted 1,2-diol is an undesirable product. Unreacted products, e.g., unreacted 1,2-diol., can increase production costs and/or reduce production efficiencies and are therefore undesirable.

As mentioned, the surfactant precursor compositions formed by the methods disclosed herein can be used to form non-ionic surfactants. However, it is possible to form the non-ionic surfactants, as discussed herein, by another process. Surfactants can lower the interfacial tension between two fluids and can be utilized in forming a dispersion, such as an emulsion or a foam. Surfactants are compounds having a hydrophilic portion, e.g., a head, and a hydrophobic portion, e.g., a tail. Some surfactants have a single hydrophilic head and a single hydrophobic tail. Other surfactants, such as dimeric surfactants, which can also be referred to as Gemini surfactants, include two surfactants, e.g., two surfactant molecules, chemically bonded together by a spacer. Trimeric surfactants can have three surfactants, e.g., three surfactant molecules, chemically bonded together by two spacers. As an example, trimeric surfactants can include three heads and three tails or two heads and three tails. Non-ionic surfactants are surfactants that do not have an electrical charge in solution.

Non-ionic surfactants can be desirable for some applications, for example some oil recovery processes. Other surfactants, such as anionic surfactants, can have a high affinity to formation rock within an oil containing reservoir, e.g., carbonate. Surfactants with a high affinity to formation rock can adsorb into the formation rock, leading to surfactant loss. In some oil recovery processes emulsions can be utilized for conformance control and mobility control, which can improve the sweep efficiency of the process. Without the surfactant present, there is less likelihood of forming an emulsion within the oil containing reservoir, which can lead to early breakthrough and poor sweep. Advantageously, non-ionic surfactants have a lesser affinity to formation rock within an oil containing reservoir, as compared to some other surfactants. In accordance with a number of embodiments of the present disclosure, non-ioinic surfactants, e.g. a dimeric non-ionic surfactant and/or a trimeric non-ionic surfactant as discussed herein, formed from the surfactant precursor compositions discussed herein may be employed in an oil recovery composition and/or a method for oil recovery.

Non-ioinic surfactants, e.g. the dimeric non-ionic surfactant and/or the trimeric non-ionic surfactant as discussed herein, can be formed by an alkoxylation procedure. As an example, the surfactant precursor compositions, e.g., the dimer of the 1,2-diol and/or the trimer of the 1,2-diol, discussed herein can undergo a deprotonation reaction that includes a deprotonator, such as a base, e.g., potassium hydroxide, among other deprotonators. Following the deprotanation reaction, unreacted 1,2 diol, the deprotonated dimer of the 1,2-diol, and/or the deprotonated trimer of the 1,2-diol can undergo an alkoxylation reaction, by reacting with an oxide, such as ethylene oxide, propylene oxide, or butylene oxide, among other oxides. Other alkylation procedures, such as alkoxylation procedures utilizing a neutral catalyst and/or an acidic catalyst may be used to obtain non-ioinic surfactants, e.g. the dimeric non-ionic surfactant and/or the trimeric non-ionic surfactant as discussed herein.

In accordance with a number of embodiments of the present disclosure, the dimeric non-ionic surfactant can be represented by the following Formula I or a regioisomer thereof:

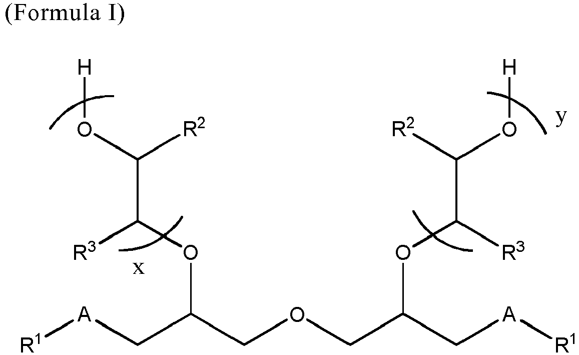

In Formula I, each R¹ is independently a hydrocarbyl group containing 1 to 20 carbons, each R² and R³ are independently an H atom or a hydrocarbyl group containing 1 to 10 carbons, each A is independently an oxygen atom or a CH₂ group; and x and y are independently 0 to 100, with the proviso that x + y is from 1 to 200. For example, x + y can be 1, 2, 3, or another integer up to and inlcuding 200. The hydrocarbyl group can include an alkyl group, an alkenyl group, alkynyl group, an aryl group, or a combination thereof.

In accordance with a number of embodiments of the present disclosure, the trimeric non-ionic surfactant can be represented by the following Formula II or a regioisomer thereof:

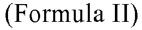

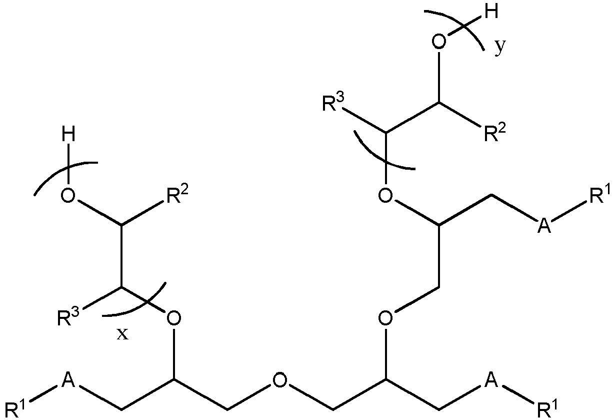

In Formula II, each R¹ is independently a hydrocarbyl group containing 1 to 20 carbons, each R² and R³ are independently an H atom or a hydrocarbyl group containing 1 to 10 carbons, each A is independently an oxygen atom or a CH₂ group; and x and y are independently 0 to 100, with the proviso that x + y is from 1 to 200. For example, x + y can be 1, 2, 3, or another integer up to and inlcuding 200. The hydrocarbyl group can include an alkyl group, an alkenyl group, alkynyl group, an aryl group, or a combination thereof.

As mentioned, the non-ionic surfactants, e.g., the dimeric non-ionic surfactant and/or the trimeric non-ionic surfactant discussed herein, can be included in an oil recovery composition. For example, in accordance with a number of embodiments of the present disclosure, an oil recovery composition can include the dimeric non-ionic surfactant of Formula I and carbon dioxide.

The oil recovery composition, as disclosed herein, can be employed, for example, to form a dispersion, such as an emulsion or a foam. Dispersions, e.g., a carbon dioxide-in-water emulsion, can be stabilized by employing a surfactant. Therefore, for some applications, such as oil recovery applications, it may be desirable to utilize a surfactant that is active at a carbon dioxide-water interface, as well as being soluble in carbon dioxide and water, such as the dimeric non-ionic surfactant and/or the trimeric non-ionic surfactant discussed herein. The emulsion can serve to block volumes of an oil containing reservoir through which a drive fluid can short-cut, thereby reducing its tendency to channel through highly permeable fissures, cracks, or strata, and directing the drive fluid toward previously unswept portions of the oil containing reservoir. As such, the emulsion can help force the drive fluid to drive recoverable hydrocarbons, e.g., oil, from the less depleted portions of the oil containing reservoir toward a production well, resulting in oil recovery.

In accordance with a number of embodiments of the present disclosure, the oil recovery composition can include carbon dioxide. The carbon dioxide can be gaseous carbon dioxide, liquid carbon dioxide, supercritical carbon dioxide, or combinations thereof. As appreciated by one skilled in the art, carbon dioxide is in a liquid phase when subjected to a pressure of about 1,000 pounds per square inch (6900 kPa) and a temperature below about 31 degrees °C. In addition, the carbon dioxide can transition to a supercritical phase when, at a pressure of about 1,000 psi (6900 kPa), the temperature rises above 31 °C. In accordance with a number of embodiments of the present disclosure, at least a portion of the carbon dioxide is supercritical carbon dioxide.

Further, in accordance with a number of embodiments of the present disclosure, carbon dioxide can be utilized in conjunction with one or more additional components. Examples of the additional components include, but are not limited to, hydrocarbon fluids, carbon disulfide, carbonyl sulfide, nitrogen, hydrogen sulfide, and combination thereof, among other additional fluids. A concentration for the additional component may have differing values for various applications and/or differing oil containing reservoirs.

In accordance with a number of embodiments of the present disclosure, the oil recovery composition can include the dimeric non-ionic surfactant such that the dimeric non-ionic surfactant has a concentration from 0.01 weight percent to 1.0 weight percent in the carbon dioxide, based upon a total weight of the dimeric non-ionic surfactant and the carbon dioxide. The oil recovery composition can, by way of example, include the dimeric non-ionic surfactant in a range with a lower limit of 0.01 weight percent, 0.03 weight percent, 0.05 weight percent to an upper limit of 1.0 weight percent, 0.95 weight percent, or 0.90 weight percent in the carbon dioxide, based upon a total weight of the dimeric non-ionic surfactant and the carbon dioxide. For example, the oil recovery composition can include the dimeric non-ionic surfactant, where the dimeric non-ionic surfactant has a concentration from 0.01 weight percent to 1.0 weight percent, 0.03 weight percent to 0.95 weight percent, or 0.05 weight percent to 0.90 weight percent in the carbon dioxide, based upon a total weight of the dimeric non-ionic surfactant and the carbon dioxide.

In accordance with a number of embodiments of the present disclosure, the oil recovery composition can include the trimeric non-ionic surfactant such that the trimeric non-ionic surfactant has a concentration from 0.00001 weight percent to 1.0 weight percent in the carbon dioxide, based upon a total weight of the trimeric non-ionic surfactant and the carbon dioxide. The oil recovery composition can, by way of example, include the trimeric non-ionic surfactant in a range with a lower limit of 0.00001 weight percent, 0.03 weight percent, 0.05 weight percent to an upper limit of 1.0 weight percent, 0.95 weight percent, or 0.90 weight percent in the carbon dioxide, based upon a total weight of the trimeric non-ionic surfactant and the carbon dioxide. For example, the oil recovery composition can include the trimeric non-ionic surfactant, where the trimeric non-ionic surfactant has a concentration from 0.00001 weight percent to 1.0 weight percent, 0.03 weight percent to 0.95 weight percent, or 0.05 weight percent to 0.90 weight percent in the carbon dioxide, based upon a total weight of the trimeric non-ionic surfactant and the carbon dioxide.

In accordance with a number of embodiments of the present disclosure, the oil recovery composition can include water. As used herein, water can include, for example, a brine, a connate water, surface water, distilled water, carbonated water, sea water or a combination thereof. The water may be injected during an oil recovery process and/or the water may be present in an oil containing reservoir prior to injecting the carbon dioxide, the dimeric non-ionic surfactant, and/or the trimeric non-ionic surfactant into the oil containing reservoir.

In accordance with a number of embodiments of the present disclosure, the oil recovery composition can include an unreacted reactant, e.g., an unreacted reactant from a synthesis of the dimeric non-ionic surfactant, and/or the trimeric non-ionic surfactant. Examples of the unreacted reactant include, but are not limited to a 1,2 diol, a dimeric diol, and a trimeric diol. In accordance with a number of embodiments of the present disclosure, the oil recovery composition can include the unreacted reactant such that the unreacted reactant has a concentration from 0.00001 weight percent to 1.0 weight percent in the carbon dioxide, based upon a total weight of the unreacted reactant and the carbon dioxide. The oil recovery composition can, by way of example, include the unreacted reactant in a range with a lower limit of 0.00001 weight percent, 0.03 weight percent, 0.05 weight percent to an upper limit of 1.0 weight percent, 0.95 weight percent, or 0.90 weight percent in the carbon dioxide, based upon a total weight of the unreacted reactant and the carbon dioxide. For example, the oil recovery composition can include the unreacted reactant, where the unreacted reactant has a concentration from 0.00001 weight percent to 1.0 weight percent, 0.03 weight percent to 0.95 weight percent, or 0.05 weight percent to 0.90 weight percent in the carbon dioxide, based upon a total weight of the unreacted reactant and the carbon dioxide.

For one or more embodiments, the oil recovery composition may include one or more additives. Examples of such additives include, but are not limited to, corrosion inhibitors, co-surfactants, e.g., other than the dimeric non-ionic surfactant and/or the trimeric non-ionic surfactant discussed herein, scale inhibitors, antioxidants or a combination thereof. The oil recovery composition may include one or more different additives for various applications and/or differing oil containing reservoirs. A concentration for the one or more additives in the oil recovery composition may have differing values for various applications and/or differing oil containing reservoirs.

In accordance with a number of embodiments of the present disclosure, such as when the water and non-ionic surfactant are co-injected into the oil containing reservoir, the oil recovery composition can include the dimeric non-ionic surfactant such that the dimeric non-ionic surfactant has a concentration from 0.01 weight percent to 5 weight percent in the water, based upon a total weight of the dimeric non-ionic surfactant and the water. The oil recovery composition can, by way of example, include the dimeric non-ionic surfactant in a range with a lower limit of 0.01 weight percent, 0.03 weight percent, 0.05 weight percent to an upper limit of 5 weight percent, 2 weight percent, or 1 weight percent in the water, based upon a total weight of the dimeric non-ionic surfactant and the water. For example, the oil recovery composition can include the dimeric non-ionic surfactant, where the dimeric non-ionic surfactant has a concentration from 0.01 weight percent to 5 weight percent, 0.03 weight percent to 2 weight percent, or 0.05 weight percent to 1 weight percent in the water, based upon a total weight of the dimeric non-ionic surfactant and the water.

In accordance with a number of embodiments of the present disclosure, the oil recovery composition can include the trimeric non-ionic surfactant such that the trimeric non-ionic surfactant has a concentration from 0.00001 weight percent to 5 weight percent in the water, based upon a total weight of the trimeric non-ionic surfactant and the water. The oil recovery composition can, by way of example, include the trimeric non-ionic surfactant in a range with a lower limit of 0.00001 weight percent, 0.03 weight percent, 0.05 weight percent to an upper limit of 5 weight percent, 2 weight percent, or 1 weight percent in the water, based upon a total weight of the trimeric non-ionic surfactant and the water. For example, the oil recovery composition can include the trimeric non-ionic surfactant, where the trimeric non-ionic surfactant has a concentration from 0.00001 weight percent to 5 weight percent, 0.03 weight percent to 2 weight percent, or 0.05 weight percent to 1 weight percent in the water, based upon a total weight of the trimeric non-ionic surfactant and the water.

In accordance with a number of embodiments of the present disclosure, the oil recovery composition can include an unreacted reactant, e.g., an unreacted reactant from a sysnthesis of the dimeric non-ionic surfactant, and/or the trimeric non-ionic surfactant. Examples of the unreacted reactant include, but are not limited to a 1,2 diol, a dimeric diol, and a trimeric diol. In accordance with a number of embodiments of the present disclosure, the oil recovery composition can include the unreacted reactant such that the unreacted reactant has a concentration from 0.00001 weight percent to 5 weight percent in the water, based upon a total weight of the unreacted reactant and the water. The oil recovery composition can, by way of example, include the unreacted reactant in a range with a lower limit of 0.00001 weight percent, 0.03 weight percent, 0.05 weight percent to an upper limit of 5 weight percent, 2 weight percent, or 1 weight percent in the water, based upon a total weight of the unreacted reactant and the water. For example, the oil recovery composition can include the unreacted reactant, where the unreacted reactant has a concentration from 0.00001 weight percent to 5 weight percent, 0.03 weight percent to 2 weight percent, or 0.05 weight percent to 1 weight percent in the water, based upon a total weight of the unreacted reactant and the water.

The oil recovery composition, as disclosed herein, can be utilized for a method of oil recovery. In accordance with a number of embodiments of the present disclosure, the method for oil recovery can include providing a flow of carbon dioxide to an oil containing reservoir injecting the dimeric non-ionic surfactant of Formula I into the flow of carbon dioxide to form a mixture, and injecting the mixture into the oil containing reservoir. As discussed, the non-ionic surfactant is soluble in the carbon dioxide and therefore the carbon dioxide and the non-ionic surfactant can be dispersed in water, e.g., water in the oil containing reservoir to form an emulsion. In accordance with a number of embodiments of the present disclosure, the emulsion can be formed in the oil containing reservoir. As discusssed, the emulsion is useful for applications, such as oil recovery processes. In accordance with a number of embodiments of the present disclosure, the method for oil recovery can include injecting the trimeric non-ionic surfactant of Formula II into the flow of carbon dioxide, and injecting the mixture, e.g., the carbon dioxide, the dimeric non-ionic surfactant, and the trimeric non-ionic surfactant into the oil containing reservoir. The mixtures can be injected into the oil containing reservoir at differing conditions, e.g., injection rate, temperature, pressure, for various applications and/or differing oil containing reservoirs.

### EXAMPLES

### Example 1

A surfactant precursor composition was formed by the following method, Example 1. 2-Ethylhexyl glyceryl ether (15.143 grams, 74.12 millimole (mmol)) and potassium carbonate (0.148 grams, 1 weight percent) were added to a 50 milliliter (mL) round-bottomed flask with a condenser. Nitrogen was added to the flask to provide an inert environment. The contents of the flask were heated to and maintained at 200 °C while mixing for 343 hours to provide the surfactant precursor composition (13.732 grams) formed by Example 1. Gas chromatography was used to determine components of the surfactant precursor composition, as reported in Table 1.

**Table 1**

| Surfactant precursor composition (formed by Example 1) | |
|---|---|
| 2-Ethylhexyl glyceryl ether (unreacted) | 14 mole % |
| Dimeric diol | 82 mole % |
| Trimeric diol | 4 mole % |

### Comparative Example A

A surfactant precursor composition was formed by the following method, Comparative Example A. 2-Ethylhexyl glyceryl ether (7.050 grams, 34.51 mmol) and sodium hydroxide (0.138 g, 3.45 mmol, 10 weight percent) were added to a 100 mL flask. Nitrogen was added to the flask to provide an inert environment. The contents of the flask were heated to and maintained at 60 °C while stirring for 30 minutes. Vacuum was applied to remove water from the flask. 2-Ethylhexyl glycidyl ether (3.214 grams, 17.25 mmol) was added to the contents of the flask incrementally over 1 hour. Then the contents of the flask were heated to and maintained at 90 °C while mixing for 6.5 hours. Then the contents of the flask were dissolved in hexane, neutralized with HCl (1 N), washed with brine, and the organic layer was dried over magnesium sulfate. Volatiles were evaporated to provide the surfactant precursor composition formed by Comparative Example A. Gas chromatography was used to determine components of the surfactant precursor composition, as reported in Table 2.

### Comparative Example B

A surfactant precursor composition was formed by the following method, Comparative Example B. 2-Ethylhexyl glyceryl ether (6.525 grams, 31.94 mmol) and sodium hydroxide (0.128 grams, 3.19 mmol, 10 mole %) were added to a 100 mL flask. Nitrogen was added to the flask to provide an inert environment. The contents of the flask were heated to and maintained at 60 °C while mixing for 30 minutes. Vacuum was applied to remove water from the flask. 2-Ethylhexyl glycidyl ether (6.544 grams, 35.13 mmol) was added to the contents of the flask incrementally over 2 hours. Then the contents of the flask were heated to and maintained at 90 °C while stirring for 17 hours. Volatiles were evaporated to provide the surfactant precursor composition formed by Comparative Example B. Gas chromatography was used to determine components of the surfactant precursor composition, as reported in Table 2.

**Table 2**

| | Surfactant precursor composition (formed by Comparative Example A) | Surfactant precursor composition (formed by Comparative Example B) |
|---|---|---|
| 2-Ethylhexyl glycerol ether (unreacted) | 24 mole % | 0 mole % |
| Dimeric diol | 66 mole % | 59 mole % |
| Trimeric diol | 8 mole % | 41 mole % |

The data of Tables 1-2 show that the surfactant precursor composition formed by Example 1 had a greater mole % of dimeric diol as compared to the surfactant precursor composition formed by Comparative Example A and the surfactant precursor composition formed by Comparative Example B. Additionally, the data of Tables 1-2 show that the surfactant precursor composition formed by Example 1 had a lesser mole % of trimeric diol as compared to the surfactant precursor composition formed by Comparative Example A and the surfactant precursor composition formed by Comparative Example B.

### Synthesis of non-ionic surfactant

Non-ionic surfactant, useful in an oil recovery composition as discussed herein, was prepared as follows. Synthesis of the non-ionic surfactant was performed in a Symyx PPR® (Parallel Pressure Reactor).

Surfactant precursor composition (2 mmol) that was formed by the method of Example 1 was added to a container with 1 mL of dry dimethoxyethane. Then potassium hydride (0.15 mmol) was added to the contents of the container. After approximately 5 minutes, propylene oxide (16 mmol) was added to the contents of the container.

The container was loaded into a Symyx PPR® well, pressurized with nitrogen to 50 psi (350 kPa), and heated to and maintained at 110 °C for 18 hours. Thereafter, the container was pressurized with nitrogen to 50 psi (350 kPa). Ethylene oxide (44 mmol), was added to the contents of the container via an Isco syringe pump at 110 °C and the contents of the container were stirred for 3 hours while maintained at 110 °C to provide the non-ionic surfactant. Based upon the mole percentages of the reactants, this synthesis provided 82 mole percent of a dimeric non-ionic surfactant of Formula I, as discussed herein, 4 mole percent of a trimeric non-ionic surfactant of Formula II, as discussed herein, and 14 mole percent of unreacted reactants including 2-ethylhexyl glyceryl ether, dimeric diol, and trimeric diol.

### Comparative non-ionic surfactant

A comparative non-ionic surfactant (C₁₈-5PO-15EO) was prepared as follows. A reactor (9 liter) was purged with nitrogen and then 1-octadecanol (1200 grams) and potassium hydroxide pellets (5.25 grams) were added to the reactor. The reactor was vented seven times with nitrogen to remove atmospheric oxygen. The rector was pressurized with nitrogen (approximately 120 kilopascal) at approximately 23 °C. The contents of the reactor were heated to 130 °C while being mixed. Propylene oxide (1300 grams) was added to the contents of the reactor over three hours while the reactor contents were maintained at 130 °C, after which the reactor contents were digested for an additional 3 hours. Then ethylene oxide (2165 grams) was added to the contents of the reactor in 4 even steps over 90 minutes, with a 2 hour digestion period following each step. Thereafter, the contents of the reactor were cooled to 65 °C and neutralized slurrying with magnesium silicate. The slurry was then filtered to provide the comparative non-ionic surfactant (C₁₈-5PO-15EO).

### CO₂ solubility of the non-ionic surfactant

Cloud point measurements were used to determine carbon dioxide solubility of the non-ionic surfactant, useful in an oil recovery composition as discussed herein. Cloud point measurements of the non-ionic surfactant, as synthesized above, in supercritical carbon dioxide were performed with a Temco Pendant drop Interfacial Tension IFT-820-P instrument (Temco, Inc.), which was modified so that the IFT cell can provide measurements of non-ionic surfactant solubility in supercritical carbon dioxide. The modified cell included a pressure vessel (42 mL), two heater bands, insulating jackets, and two high-pressure, tempered borosilicate glass windows to facilitate viewing the interior of the modified cell. A diffuse light source was placed on one window to illuminate the interior of the modified cell, and a Ramé-Hart video microscope was used on the other window to take pictures of the modified cell's interior. An accumulator (1 liter, OFI Testing Equipment, Inc.) was placed in line to the system to vary the pressure inside of the modified cell by pumping fluid to or from the accumulator in to the modified cell. One side of the accumulator, designed to hold liquid carbon dioxide, was connected to the modified cell via insulated tubing, the other side of the accumulator was connected to deionized water via insulated tubing. A floating piston separated the two sides of the accumulator. The accumulator was housed inside a Blue M oven (model # DC-256-B-ST350, Thermal Product Solutions), such that the entire accumulator could be heated to the same temperature as the modified cell. A Haskel MS-71 air driven liquid pump (Pneumatic and Hydraulic Co.) was used to adjust the pressure on the water side of the accumulator and thereby adjust the pressure inside the modified cell. A Tescom 6000 psi (40MPa) back pressure regulator (Emerson Process Management) was installed on the water line to regulate the pressure on the water side of the accumulator, and also to function as a relief valve safety device to help prevent over-pressurization of the system. A liquid carbon dioxide feed line, with another Haskel MS-71 air driven liquid pump, was added for feed to the modified cell. The spring inside this MS-71 pump was removed so the pump piston operated more slowly to avoid flashing carbon dioxide inside the pump cavity. The total volume of the modified cell, accumulator and all associated tubing was estimated to be approximately 1050 milliliters (mL). The modified cell and tubing volume was estimated to be about 50 mL, while the accumulator volume was measured to be 1000 mL.

Non-ionic surfactant (liquid phase, approximately 0.385 g) was added to the system (0.046 g was added to the modified cell and 0.355 g was added to the carbon dioxide side of the accumulator).

Before carbon dioxide addition, the water side of the accumulator was pumped full of deionized water to move the piston to "zero" the volume. The deionized water (500mL) was drained from the water side of the accumulator as liquid carbon dioxide (20 °C, 500mL) was added to the carbon dioxide side of the accumulator where the carbon dioxide mixed with the non-ionic surfactant. At 20 °C the density of liquid carbon dioxide was approximately 0.774 g/mL. The MS-71 carbon dioxide feed pump pressurized the entire system to approximately 2300 psi (16MPa) before the carbon dioxide feed line was closed and the system equilibrated for several minutes to allow the surfactant to diffuse into the carbon dioxide. The total mass of carbon dioxide in the system was calculated to be approximately 385.0 grams; 29.3 grams in the modified cell, and 355.7 grams in the accumulator. Based on the total mass of carbon dioxide in the system, the non-ionic surfactant was added to the system at approximately 1000 parts per million (ppm).

The modified cell and Blue M oven temperatures were set at 40 °C, 60 °C, and 80 °C for respective tests and the Haskel MS-71 water pump was used to increase the system pressure until the interior of the modified cell was completely clear (approximately 2500 psi- (17 MPA)) as viewed on a computer screen coupled to the Ramé-Hart video microscope. The system was equilibrated for approximately 2 hours in this state in order to reach equilibrium at the temperature set point. After equilibration, the Tescom back pressure regulator was used on the water line to slowly decrease the system pressure until the non-ionic surfactant began to precipitate. The pressure at which the first sign of precipitation was observed is the cloud point of the non-ionic surfactant at the given temperature. The determined cloud points are reported in Table 3.

### CO₂ solubility of the comparative non-ionic surfactant

Cloud point measurements of the comparative non-ionic surfactant with the change: comparative non-ionic surfactant was used in place of the non-ionic surfactant that was formed from the surfactant precursor composition of Example 1. The determined cloud points are reported in Table 3.

**Table 3**

| | Testing temperature 40 °C | Testing temperature 60 °C | Testing temperature 80 °C |
|---|---|---|---|
| Non-ionic surfactant | Cloud Point | | |
| (formed from the surfactant precursor composition of Example 1) | 2430 psi (16.8 MPa) | 3495 psi (24.1 MPa) | 4100 psi (28.3 MPa) |
| | Visual Solubility Inspection | | |
| | partly soluble in CO₂ | mostly soluble in CO₂ | completely soluble in CO₂ |
| Comparative non-ionic surfactant | Cloud Point | | |
| | --- | --- | --- |
| | Visual Solubility Inspection | | |
| | mostly insoluble in CO₂ | mostly insoluble in CO₂ | mostly insoluble in CO₂ |

Solubility was determined by visual inspection. In Table 3, partly soluble refers to approximately one volumetric half of the tested surfactant remaining undissolved in CO₂, mostly soluble refers to approximately one volumetric third of the tested surfactant remaining undissolved in CO₂, completely soluble refers to approximately none of the tested surfactant remaining undissolved in CO₂, and mostly insoluble refers to approximately more than one volumetric half of the tested surfactant remaining undissolved in CO₂.

The data of Table 3 show that the non-ionic surfactant (formed from the surfactant precursor composition of Example 1) is soluble in CO₂ and has a greater solubility in CO₂ at each of the temperatures tested as compared to the comparative non-ionic surfactant (C₁₈-₅PO-15EO). The data of Table 3 indicate that the non-ionic surfactant (formed from the surfactant precursor composition of Example 1) is useful for applications where CO₂ solubility is desirable, such as oil recovery compositions and/or methods for oil recovery, among other applications.

### Formation response testing

Formation response testing, as utilized for oil recovery methods, was performed with a Model 6100 Formation Response Tester (FRT) (Chandler Engineering).

The FRT had two core holders, which can be utilized separately or together in parallel or series. For the formation response testing a single core holder was used containing a single core (1.5" inch (3.8 cm) diameter and 12" (30.5 cm) long , Buff Berea sandstone, 200-300 millidarcy air permeability, available from Kocurek Industries). The core was wrapped in Saran™ wrap, then aluminum foil, and then placed inside a respective Aflas® 90 rubber sleeve which was then inserted into the Hassler-type core holder. The confining pressure of the core was maintained at approximately 500 psi (3.4 MPa) above the internal pressure. The core was heated to the desired temperature before fluids were injected. The fluids were preheated to the core temperature prior to injection to minimize heating and cooling effects in the core. A differential pressure transducer was used to measure pressure drop across core up to 50 psi (3.4 MPa). Pressure drops exceeding 50 psi (3.4 MPa) across the core were measured as a difference between the cell inlet and cell outlet pressure transducers.

The core was saturated with non-ionic surfactant (formed from the surfactant precursor composition of Example 1) by injecting ∼2 pore volumes of a 1 wt.% solution of surfactant in brine. Brine, including 1 weight percent non-ionic surfactant (formed from the surfactant precursor composition of Example 1) (flow rate: 0.1 milliliters/minute), and CO₂ (flow rate: 0.9 milliliters/minute) were then co-injected into the core to form Example 2, an oil recovery composition including carbon dioxide, the dimeric non-ionic surfactant of Formula I, as discussed herein, and the trimeric non-ionic surfactant of Formula II, as discussed herein. The brine and the CO₂ were co-injected into the core at 1500 psi (10.3 MPa) and 23 °C. Pressure drop across the core was monitored for 10.5 hours.

Figure 1 illustrates a pressure drop versus time diagram associated with an oil recovery composition in accordance with one or more embodiments of the present disclosure. Figure 1 data show an increasing pressure drop across the core over time. This increasing pressure drop indicated the formation of an emulsion in the core.

## Claims

1. An oil recovery composition comprising:
a dimeric non-ionic surfactant of Formula I or a regioisomer thereof: 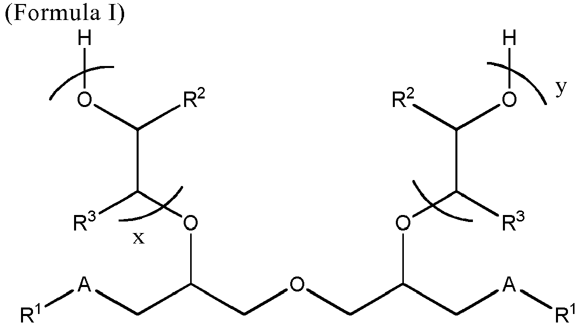 in which each R¹ is independently a hydrocarbyl group containing 1 to 20 carbons, each R² and R³ are independently an H atom or a hydrocarbyl group containing 1 to 10 carbons, each A is independently an oxygen atom or a CH₂ group; and x and y are independently 0 to 100, with the proviso that x + y is from 1 to 200; and
carbon dioxide.

2. The composition of claim 1, wherein the dimeric non-ionic surfactant has a concentration from 0.01 weight percent to 1.0 weight percent in the carbon dioxide, based upon a total weight of the dimeric non-ionic surfactant and the carbon dioxide.

3. The composition of claim 1 0r claim 2, wherein the oil recovery composition includes a trimeric non-ionic surfactant of Formula II or a regioisomer thereof: 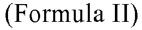 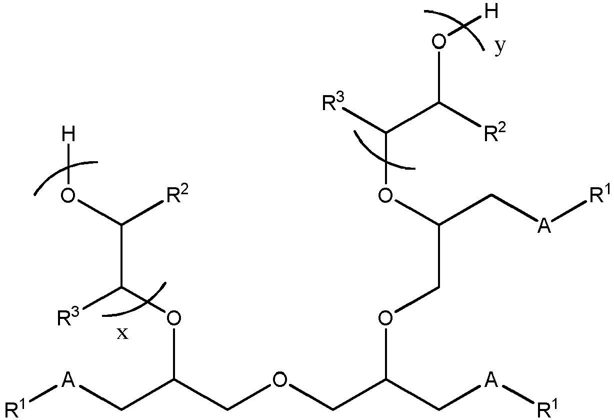 in which each R¹ is independently a hydrocarbyl group containing 1 to 20 carbons, each R² and R³ are independently an H atom or a hydrocarbyl group containing 1 to 10 carbons, each A is independently an oxygen atom or a CH₂ group; and x and y are independently 0 to 100, with the proviso that x + y is from 1 to 200.

4. The composition of claim 3, wherein the trimeric non-ionic surfactant has a concentration from 0.00001 weight percent to 1.0 weight percent in the carbon dioxide, based upon a total weight of the trimeric non-ionic surfactant and the carbon dioxide.

5. The composition of any one of the preceding claims, wherein at least a portion of the carbon dioxide is supercritical carbon dioxide.

6. The composition of any one of the preceding claims, further including water.

7. The composition of claim 6, wherein the carbon dioxide and the dimeric non-ionic surfactant are dispersed in the water to form an emulsion.

8. A method for oil recovery comprising:
providing a flow of carbon dioxide to an oil containing reservoir;
injecting a dimeric non-ionic surfactant of Formula I or a regioisomer thereof: 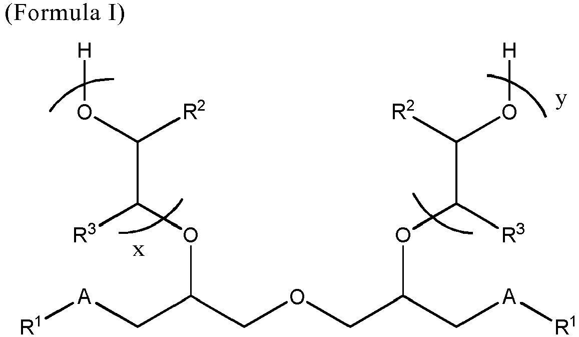 in which each R¹ is independently a hydrocarbyl group containing 1 to 20 carbons, each R² and R³ are independently an H atom or a hydrocarbyl group containing 1 to 10 carbons, each A is independently an oxygen atom or a CH₂ group; and x and y are independently 0 to 100, with the proviso that x + y is from 1 to 200 into the flow of carbon dioxide to form a mixture; and
injecting the mixture into the oil containing reservoir.

9. The method of claim 8, wherein the the dimeric non-ionic surfactant has a concentration from 0.01 weight percent to 1.0 weight percent in the carbon dioxide, based upon a total weight of the dimeric non-ionic surfactant and the carbon dioxide.

10. The method of claim 8 or claim 9, wherein at least a portion of the carbon dioxide is supercritical carbon dioxide.

11. The method of any one of claims 8-10, including dispersing the carbon dioxide and the dimeric non-ionic surfactant in water to form an emulsion.

12. The method of claim 11, wherein the emulsion is formed in the oil containing reservoir.

## Patentansprüche

1. Eine Zusammensetzung zur Erdölgewinnung, die Folgendes beinhaltet:
eine dimere, nichtionische oberflächenaktive Substanz der Formel I oder ein Stellungsisomer davon: 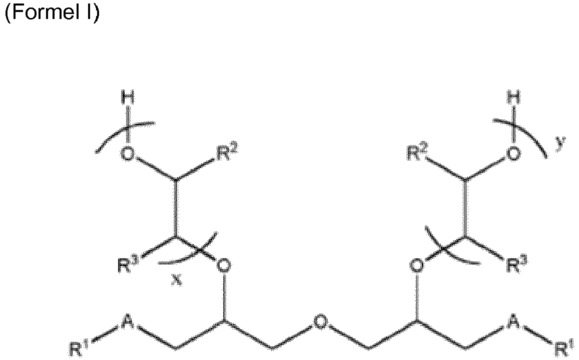
wobei jedes R¹ unabhängig eine Kohlenwasserstoffgruppe ist, die 1 bis 20 Kohlenstoffe enthält, jedes R² und R³ unabhängig ein H-Atom oder eine Kohlenwasserstoffgruppe ist, die 1 bis 10 Kohlenstoffe enthält, jedes A unabhängig ein Sauerstoffatom oder eine CH₂-Gruppe ist; und x und y unabhängig von 0 bis 100 betragen, unter der Bedingung, dass x + y von 1 bis 200 beträgt; und
Kohlendioxid.

2. Zusammensetzung gemäß Anspruch 1, wobei die dimere, nichtionische oberflächenaktive Substanz im Kohlendioxid eine Konzentration von 0,01 Gewichtsprozent bis 1,0 Gewichtsprozent, bezogen auf das Gesamtgewicht der dimeren, nichtionischen oberflächenaktiven Substanz und des Kohlendioxids, aufweist.

3. Zusammensetzung gemäß Anspruch 1 oder Anspruch 2, wobei die Zusammensetzung zur Erdölgewinnung eine trimere, nichtionische oberflächenaktive Substanz der Formel II oder ein Stellungsisomer davon umfasst: 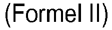 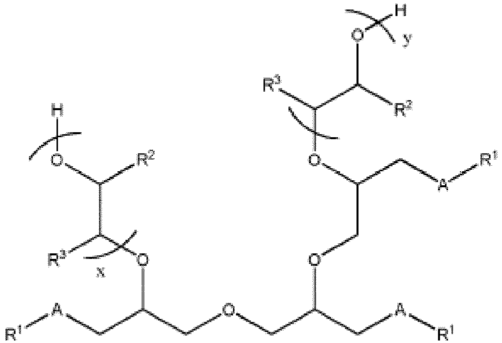 wobei jedes R¹ unabhängig eine Kohlenwasserstoffgruppe ist, die 1 bis 20 Kohlenstoffe enthält, jedes R² und R³ unabhängig ein H-Atom oder eine Kohlenwasserstoffgruppe ist, die 1 bis 10 Kohlenstoffe enthält, jedes A unabhängig ein Sauerstoffatom oder eine CH₂-Gruppe ist; und x und y unabhängig von 0 bis 100 betragen, unter der Bedingung, dass x + y von 1 bis 200 beträgt.

4. Zusammensetzung gemäß Anspruch 3, wobei die trimere, nichtionische oberflächenaktive Substanz im Kohlendioxid eine Konzentration von 0,00001 Gewichtsprozent bis 1,0 Gewichtsprozent, bezogen auf das Gesamtgewicht der trimeren, nichtionischen oberflächenaktiven Substanz und des Kohlendioxids, aufweist.

5. Zusammensetzung gemäß einem der vorhergehenden Ansprüche, wobei mindestens ein Teil des Kohlendioxids überkritisches Kohlendioxid ist.

6. Zusammensetzung gemäß einem der vorhergehenden Ansprüche, die des Weiteren Wasser umfasst.

7. Zusammensetzung gemäß Anspruch 6, wobei das Kohlendioxid und die dimere, nichtionische oberflächenaktive Substanz in dem Wasser dispergiert sind, um eine Emulsion zu bilden.

8. Ein Verfahren zur Erdölgewinnung, das Folgendes beinhaltet:
Bereitstellen eines Kohlendioxidflusses in ein Erdöl enthaltendes Reservoir;
Einspritzen einer dimeren, nichtionischen oberflächenaktiven Substanz der Formel I oder eines Stellungsisomers davon: 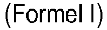 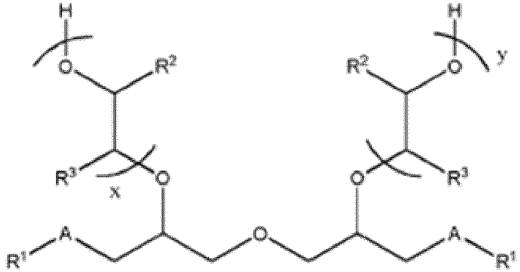
wobei jedes R¹ unabhängig eine Kohlenwasserstoffgruppe ist, die 1 bis 20 Kohlenstoffe enthält, jedes R² und R³ unabhängig ein H-Atom oder eine Kohlenwasserstoffgruppe ist, die 1 bis 10 Kohlenstoffe enthält, jedes A unabhängig ein Sauerstoffatom oder eine CH₂-Gruppe ist; und x und y unabhängig von 0 bis 100 betragen, unter der Bedingung, dass x + y von 1 bis 200 beträgt, in den Kohlendioxidfluss, um ein Gemisch zu bilden; und
Einspritzen des Gemischs in das Erdöl enthaltende Reservoir.

9. Verfahren gemäß Anspruch 8, wobei die dimere, nichtionische oberflächenaktive Substanz im Kohlendioxid eine Konzentration von 0,01 Gewichtsprozent bis 1,0 Gewichtsprozent, bezogen auf das Gesamtgewicht der dimeren, nichtionischen oberflächenaktiven Substanz und des Kohlendioxids, aufweist.

10. Verfahren gemäß Anspruch 8 oder Anspruch 9, wobei mindestens ein Teil des Kohlendioxids überkritisches Kohlendioxid ist.

11. Verfahren gemäß einem der Ansprüche 8-10, umfassend das Dispergieren des Kohlendioxids und der dimeren, nichtionischen oberflächenaktiven Substanz in Wasser, um eine Emulsion zu bilden.

12. Verfahren gemäß Anspruch 11, wobei die Emulsion in dem Erdöl enthaltenden Reservoir gebildet wird.

## Revendications

1. Une composition de récupération de pétrole comprenant :
un tensioactif non ionique dimère de la Formule I ou un régioisomère de celui-ci : 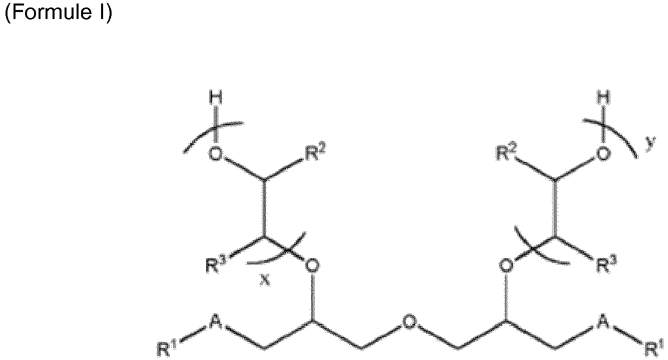 dans laquelle chaque R¹ est indépendamment un groupe hydrocarbyle contenant 1 à 20 carbones, chaque R² et R³ sont indépendamment un atome H ou un groupe hydrocarbyle contenant 1 à 10 carbones, chaque A est indépendamment un atome d'oxygène ou un groupe CH₂ ; et x et y valent indépendamment 0 à 100, à la condition que x + y vaille de 1 à 200 ; et
du dioxyde de carbone.

2. La composition de la revendication 1, où le tensioactif non ionique dimère a une concentration allant de 0,01 pour cent en poids à 1,0 pour cent en poids dans le dioxyde de carbone, rapporté à un poids total du tensioactif non ionique dimère et du dioxyde de carbone.

3. La composition de la revendication 1 ou de la revendication 2, où la composition de récupération de pétrole inclut un tensioactif non ionique trimère de la Formule II ou un régioisomère de celui-ci : 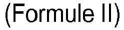 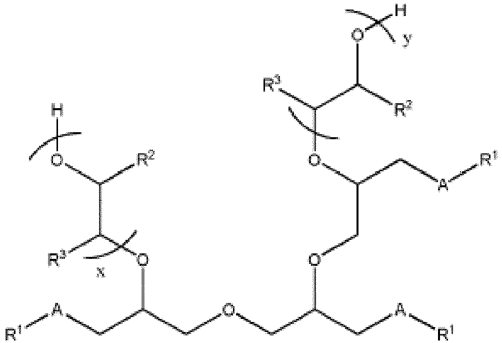 dans laquelle chaque R¹ est indépendamment un groupe hydrocarbyle contenant 1 à 20 carbones, chaque R² et R³ sont indépendamment un atome H ou un groupe hydrocarbyle contenant 1 à 10 carbones, chaque A est indépendamment un atome d'oxygène ou un groupe CH₂ ; et x et y valent indépendamment 0 à 100, à la condition que x + y vaille de 1 à 200.

4. La composition de la revendication 3, où le tensioactif non ionique trimère a une concentration allant de 0,00001 pour cent en poids à 1,0 pour cent en poids dans le dioxyde de carbone, rapporté à un poids total du tensioactif non ionique trimère et du dioxyde de carbone.

5. La composition de l'une quelconque des revendications précédentes, où au moins une portion du dioxyde de carbone est du dioxyde de carbone supercritique.

6. La composition de l'une quelconque des revendications précédentes, incluant en sus de l'eau.

7. La composition de la revendication 6, où le dioxyde de carbone et le tensioactif non ionique dimère sont dispersés dans l'eau afin de former une émulsion.

8. Une méthode pour la récupération de pétrole comprenant :
le fait de fournir un flux de dioxyde de carbone jusqu'à un réservoir contenant du pétrole ;
le fait d'injecter un tensioactif non ionique dimère de la Formule I ou un régioisomère de celui-ci : 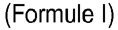 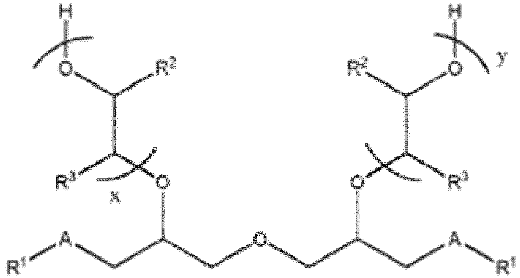
dans laquelle chaque R¹ est indépendamment un groupe hydrocarbyle contenant 1 à 20 carbones, chaque R² et R³ sont indépendamment un atome H ou un groupe hydrocarbyle contenant 1 à 10 carbones, chaque A est indépendamment un atome d'oxygène ou un groupe CH₂ ; et x et y valent indépendamment 0 à 100, à la condition que x + y vaille de 1 à 200, dans le flux de dioxyde de carbone afin de former un mélange ; et
le fait d'injecter le mélange dans le réservoir contenant du pétrole.

9. La méthode de la revendication 8, où le tensioactif non ionique dimère a une concentration allant de 0,01 pour cent en poids à 1,0 pour cent en poids dans le dioxyde de carbone, rapporté à un poids total du tensioactif non ionique dimère et du dioxyde de carbone.

10. La méthode de la revendication 8 ou de la revendication 9, où au moins une portion du dioxyde de carbone est du dioxyde de carbone supercritique.

11. La méthode de l'une quelconque des revendications 8 à 10, incluant le fait de disperser le dioxyde de carbone et le tensioactif non ionique dimère dans de l'eau afin de former une émulsion.

12. La méthode de la revendication 11, où l'émulsion est formée dans le réservoir contenant du pétrole.
